# EUROPÄISCHE PATENTSCHRIFT

(11) **EP 3 254 003 B1**
(45) Veröffentlichungstag und Bekanntmachung des Hinweises auf die Patenterteilung: **13.05.2020**
(21) Anmeldenummer: 16700569.3
(22) Anmeldetag: 13.01.2016
(51) Int. Cl.: F16K 1/36, F02B 37/00, F16K 31/06, H01F 7/08, F02B 37/16, H01F 7/127

(54) **ELEKTROMAGNETVENTIL FÜR DEN KFZ-BEREICH**
SOLENOID VALVE FOR THE AUTOMOTIVE INDUSTRY
ÉLECTROVANNE DESTINÉE AU SECTEUR DE L'INDUSTRIE AUTOMOBILE

(30) Priorität: 02.02.2015 DE 102015101477
(43) Veröffentlichungstag der Anmeldung: 13.12.2017
(73) Patentinhaber: Pierburg GmbH, 41460 Neuss (DE)
(72) Erfinder: SCHNELKER, Franz-Josef, 41470 Neuss (DE); FERNANDES, Alvito, 51377 Leverkusen (DE); ZURKE, Janusz, 47638 Straelen (DE)
(74) Vertreter: terpatent Patentanwälte ter Smitten Eberlein-Van Hoof Rütten Daubert
(86) Internationale Anmeldenummer: PCT/EP2016/050556
(87) Internationale Veröffentlichungsnummer: WO 2016/124363

(56) Entgegenhaltungen:
- WO-A1-2006/029814
- DE-A1- 19 603 384
- DE-A1-102011 016 276
- DE-A1-102011 056 096
- JP-U- S63 184 280

## Beschreibung

Die Erfindung betrifft ein Elektromagnetventil für den Kfz-Bereich mit einem Gehäuse, das einen Einlass- und einen Auslasskanal besitzt, wobei in dem Gehäuse ein elektromagnetischer Kreis vorgesehen ist, der aus einer auf einen Spulenträger gewickelten Spule, einem Anker, einem Kern und einer Rückschlusseinrichtung aufgebaut ist, wobei der Anker und der Kern in einem Ventilinnenraum angeordnet sind und wobei sich dem Anker eine Ventilstange anschließt, die im Kern über Lagermittel beweglich gelagert ist, wobei der Anker mit einem Ventilverschlusskörper wirkverbunden ist, wobei Federmittel zur Vorspannung des Ankers vorgesehen sind, und wobei ein Hülsenkörper zur Abdichtung des Ventilinnenraumes vorgesehen ist, wobei der Hülsenkörper als Lagerorgan für den Anker ausgebildet ist.

Derartige Elektromagnetventile sind aus dem Stand der Technik hinlänglich bekannt. Sie werden beispielsweise als Schubumluftventile, Kühlmittelschaltventile, Ölventile oder aber auch als Ölmodulatoren eingesetzt. Um den elektromagnetischen Kreis wirkungsvoll gegen das zu steuernde oder regelnde Fluid abzudichten, ist es bekannt, den Ventilinnenraum mittels eines Hülsenkörpers gegenüber dem Spulenträger abzudichten. Ein Beispiel für ein derartiges Elektromagnetventil findet sich in der DE 196 03 384 A1. Hierbei ist der Hülsenkörper als Führungshülse ausgelegt, die den Anker in Axialrichtung beweglich lagert. Der ventilverschlusskörper ist als balliges Ventilverschlussglied ausgebildet, dass auf bekannte Weise mit einem Ventilsitz zusammenwirkt. Insbesondere bei Schaltventilen ist ein Druckausgleich mit einem zu schaltenden Einlasskanal erwünscht, um kurze Schaltzeiten mit geringem Kraftaufwand realisieren zu können. Dies ist mit dem gattungsgemäßen Elektromagnetventil nicht möglich.

Aus der internationalen Patentanmeldung WO 2006/029814 A1 und der deutschen Offenlegungsschrift DE 10 2011 016 276 A1 sind Elektromagnetventile bekannt, die im Bereich eines Ventilverschlusskörpers Druckausgleichsöffnungen aufweisen.

Aufgabe der Erfindung ist es daher, auf einfache und kostengünstige Weise ein Elektromagnetventil der gattungsgemäßen Art bereitzustellen, das auf einfache und kostengünstige Weise einen sicheren Druckausgleich gewährleistet.

Diese Aufgabe wird dadurch gelöst, dass der Verschlusskörper Druckausgleichsöffnungen aufweist und über ein Abdichtorgan beweglich im Hülsenkörper gelagert ist. Durch eine derartige konstruktive Ausgestaltung wird eine einfache und kostengünstige Abdichtung des Ventilinnenraumes gegenüber der Umgebung gewährleistet, wodurch ein einfacher Druckausgleich ermöglicht wird.

In einer vorteilhaften Ausführungsform ist der Hülsenkörper unter Vorspannung im Gehäuse verrastet, wodurch der Hülsenkörper auf einfache Art und Weise axial fixiert ist. Zwischen dem Hülsenkörper und dem Gehäuse kann ein zweites Abdichtorgan angeordnet sein, wodurch eine sichere Abdichtung der Spule gewährleistet ist. Die Ventilstange kann in vorteilhafterweise über eine Gleitbohrung im Kern beweglich gelagert sein. Alternativ kann beispielsweise auch eine Gleitbuchse vorgesehen sein.

Die Druckausgleichsöffnungen sind in vorteilhafter Weise über Spielabstände der kardanischen Lagermittel und über Längsrillen- oder Vertiefungen in der Ventilstange mit dem Ventilinnenraum verbunden. Im Falle eines oberhalb des Kernes, vom ventilverschlusskörper abgewandt angeordneten Ankers kann eine Bohrung im Anker vorgesehen sein.

Um auf einfache Weise einen optimalen Druckausgleich zu gewährleisten, ist es vorteilhaft, wenn der Durchmesser d_{S} des Ventilsitzes gleich dem Durchmesser d_{H} der Ventilhülse im Bereich des Dichtorgans ist.

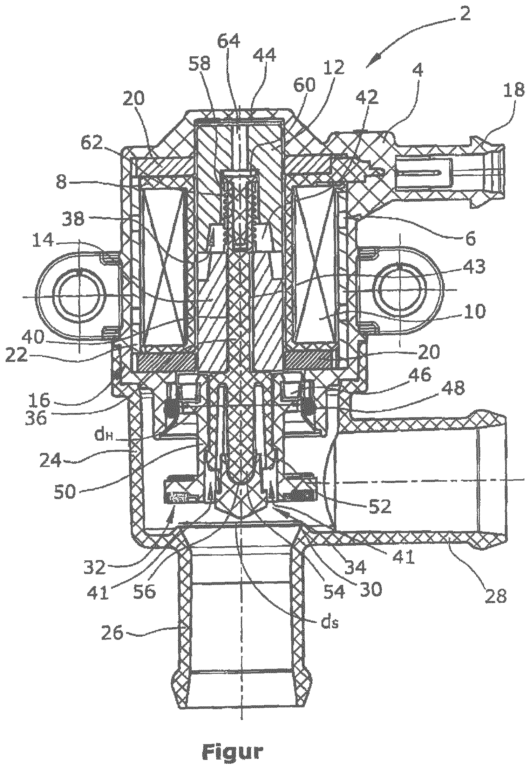

Nachfolgend wird die Erfindung anhand einer Zeichnung näher erläutert, hierbei zeigt die einzige Figur eine erste Schnittansicht des erfindungsgemäßen Elektromagnetventils.

Die einzige Figur zeigt eine Schnittansicht eines erfindungsgemäßen Elektromagnetventils 2. Dieses Elektromagnetventil 2 weist ein Gehäuse 4 auf, in dem ein elektromagnetischer Kreis 6 vorgesehen ist, der im Wesentlichen aus einer auf einem Spulenträger 8 gewickelten Spule 10, einem Anker 12, einem Kern 14 und einer Rückschlusseinrichtung 16 besteht. Die Spule 10 kann hierbei auf bekannte Weise über einen Elektrostecker 18 mit einer nicht weiter dargestellten Motorsteuerung verbunden sein. Die Rückschlusseinrichtung 16 besteht auf bekannte Weise aus einer Rückschlussblechanordnung 20 und einem Joch 22.

Das Elektromagnetventil 2 ist im vorliegenden Ausführungsbeispiel als Kühlmittelschaltventil ausgeführt und besitzt hierzu einen Anschlusskörper 24 mit einem Kühlmitteleinlasskanal 26 und einem Kühlmittelauslasskanal 28. Der Kühlmitteleinlasskanal 26 weist hierbei auf bekannte Weise einen Ventilsitz 30 auf, der auf bekannte Weise mit einem Ventilverschlusskörper 32 zusammenwirkt. Dieser Ventilverschlusskörper 32 ist über kardanische Lagermittel 34 mit einer Ventilstange 36 verbunden. Die Ventilstange 36 ist ihrerseits über einseitige, in Axialrichtung wirkende Formschlussmittel 38 mit dem Anker 12 wirkverbunden und über eine Gleitbohrung 40 beweglich im Kern 14 gelagert. Der Ventilverschlusskörper 32 weist im vorliegenden Ausführungsbeispiel zwei Druckausgleichsöffnungen 41 auf, die einen Ventilinnenraum 42 fluidisch mit dem Kühlmitteleinlasskanal 26 verbunden, so dass das Elektromagnetventil 2 vollständig druckausgeglichen arbeiten kann. Hierzu kann das Kühlmittel durch die Druckausgleichsöffnungen 41 in den Ventilverschlusskörper 32 eintreten und kann über Spielabstände der kardanischen Lagermittel 43 sowie über Längsrillen 43 der Ventilstange 36 zum Ventilinnenraum 42 gelangen. Um nun den Spulenkörper gegenüber dem Ventilinnenraum 42 und dem darin befindlichen Fluid sowie möglichen Verunreinigungen abzudichten, ist ein Hülsenkörper 44 vorgesehen, der mit dem Gehäuse 4 verrastet ist. Über ein erstes Dichtorgan 46 ist der Ventilverschlusskörper 32 beweglich in dem Hülsenkörper 44 gelagert, der zudem noch über ein zweites Dichtorgan 48 gegenüber dem Gehäuse 4 abgedichtet angeordnet ist. Der Durchmesser ds des Ventilsitzes 30 ist hierbei gleich dem Durchmesser d_{H} der Ventilhülse 44 im Bereich des Dichtorgans 46 ist und gewährleistet auf diese Weise einen optimalen Druckausgleich.

Die kardanischen Lagermittel 34 bestehen im vorliegenden Ausführungsbeispiel aus am Ventilverschlusskörper 32 angeordneten Rastorganen 50, die mit an der Ventilstange 36 angeordneten Federorganen 52 derart zusammenwirken, dass die Ventilstange 36 unter Spiel, federnd mit dem Ventilverschlusskörper 32 verbunden ist. Des Weiteren ist die Ventilstange 36 am zum Ventilverschlusskörper 32 gerichteten Ende 54 kugelförmig ausgebildet und greift in eine entsprechende ballige Ausformung 56 des Ventilverschlusskörpers 32 ein. Des Weiteren bestehen die Formschlussmittel 38 aus einem Stiftorgan 58 und einem Sackloch 60 in dem Anker, wobei das Stiftorgan 58 in der Ventilstange 38 eingerastet ist und in das Sackloch 60 unter Spiel eingreift. Zwischen Stift 58 und Kern 14 ist ein Federorgan 62 vorgesehen, wodurch die Ventilstange 36 und damit auch der Anker 12 im nicht bestromten Zustand in einer Offen-Stellung vorgespannt ist. Da im vorliegendem Ausführungsbeispiel der Anker 12 oberhalb des Kernes 14, vom Ventilverschlusskörper 32 abgewandt angeordnet ist, weist der Anker 12 eine Bohrung 64 auf, durch die das Einrasten des Stiftorgans 58 mittels eines Werkzeuges während der Montage ermöglicht wird. Alternativ ist es auch möglich den Kern 14, die Ventilstange 36 sowie das Stiftorgan 58 und das Federorgan 62 als Vorbaugruppe bereit zu stellen. Desweiteren wird durch diese Bohrung 64 ein Kühlmittelfluss in den Ventilinnenraum 42 oberhalb des Ankers 12 gewährleistet.

Durch das erfindungsgemäße Elektromagnetventil 2 ist ein einfacher Aufbau sichergestellt, wobei das der Ventilinnenraum 42 des Elektromagnetventil 2 in optimaler Weise gegenüber der Spule 10 abgedichtet ist und trotzdem ein Druckausgleich und damit eine bedarfsgerechte Auslegung des elektromagnetischen Kreise 6 möglich ist.

## Patentansprüche

1. Elektromagnetventil für den Kfz-Bereich mit einem Gehäuse (4), das einen Einlass- und einen Auslasskanal (26, 28) besitzt, wobei in dem Gehäuse (4) ein elektromagnetischer Kreis (6) vorgesehen ist, der aus einer auf einen Spulenträger (8) gewickelten Spule (10), einem Anker (12), einem Kern (14) und einer Rückschlusseinrichtung (16) aufgebaut ist, wobei der Anker (12) und der Kern (14) in einem Ventilinnenraum (42) angeordnet sind und wobei sich dem Anker (12) eine Ventilstange (36) anschließt, die im Kern (14) über Lagermittel (40) beweglich gelagert ist, wobei der Anker (12) mit einem Ventilverschlusskörper (32) wirkverbunden ist, wobei Federmittel (62) zur Vorspannung des Ankers (12) vorgesehen sind, und wobei ein Hülsenkörper (44) zur Abdichtung des Ventilinnenraumes (42) vorgesehen ist, wobei der Hülsenkörper (44) als Lagerorgan für den Anker (12) ausgebildet ist, **dadurch gekennzeichnet, dass** das der Ventilverschlusskörper (32) Druckausgleichsöffnungen (41) aufweist und über ein Dichtorgan (46) beweglich im Hülsenkörper (44) gelagert ist.

2. Elektromagnetventil nach Anspruch 1, **dadurch gekennzeichnet, dass** der Hülsenkörper (44) unter Vorspannung im Gehäuse (4) verrastet ist.

3. Elektromagnetventil nach Anspruch 1 oder 2, **dadurch gekennzeichnet, dass** zwischen dem Hülsenkörper (44) und dem Gehäuse (4) ein zweites Dichtorgan (48) angeordnet ist.

4. Elektromagnetventil nach einem der vorhergehenden Ansprüche, **dadurch gekennzeichnet, dass** die Ventilstange (36) über eine Gleitbohrung (40) im Kern (14) beweglich gelagert ist.

5. Elektromagnetventil nach einem der vorhergehenden Ansprüche, **dadurch gekennzeichnet, dass** die Druckausgleichsöffnungen (41) über Spielabstände kardanischer Lagermittel (34) und über Längsrillen- oder Vertiefungen (43) in der Ventilstange (36) mit dem Ventilinnenraum (42) verbunden sind.

6. Elektromagnetventil nach einem der vorhergehenden Ansprüche, **dadurch gekennzeichnet, dass** eine Bohrung (64) im Anker (12) vorgesehen ist.

7. Elektromagnetventil nach einem der vorhergehenden Ansprüche, **dadurch gekennzeichnet, dass** ein Durchmesser ds des Ventilsitzes (30) gleich einem Durchmesser d_{H} der Ventilhülse (44) im Bereich des Dichtorgans (46) ist.

## Claims

1. Solenoid valve for the automotive industry, comprising a housing (4) which has an inlet conduit and an outlet conduit (26, 28), wherein, in the housing (4), an electromagnetic circuit (6) is provided, which is made up of a coil (10) wound onto a coil carrier (8), an armature (12), a core (14), and a return device (16), wherein the armature (12) and the core (14) are arranged in a valve interior (42) and wherein a valve rod (36), which is movably mounted in the core (14) by means of bearing means (40), adjoins the armature (12), wherein the armature (12) is operatively connected to a valve closure body (32), wherein spring means (62) are provided for pretensioning the armature (12), and wherein a sleeve body (44) is provided for sealing the valve interior (42), wherein the sleeve body (44) is designed as a bearing element for the armature (12), **characterized in that** the valve closure body (32) has pressure equalization openings (41) and is movably mounted in the sleeve body (44) by means of a sealing element (46).

2. Solenoid valve of claim 1, **characterized in that** the sleeve body (44) is locked in the housing (4) under pre-tension.

3. Solenoid valve of claim 1 or 2, **characterized in that** a second sealing element (48) is arranged between the sleeve body (44) and the housing (4).

4. Solenoid valve of one of the preceding claims, **characterized in that** the valve rod (36) is movably mounted in the core (14) by means of a slide bore (40).

5. Solenoid valve of one of the preceding claims, **characterized in that** the pressure equalization openings (41) are connected to the valve interior (42) through tolerances of the gimbal mounting means (34) and through longitudinal grooves or recesses (43) in the valve rod (36).

6. Solenoid valve of one of the preceding claims, **characterized in that** a bore (64) is provided in the armature (12).

7. Solenoid valve of one of the preceding claims, **characterized in that** a diameter d_{S} of the valve seat (30) is equal to a diameter d_{H} of the valve sleeve (44) in the region of the sealing element (46).

## Revendications

1. Vanne électromagnétique pour le secteur automobile avec un carter (4) comprenant un canal d'entrée et un canal de sortie (26, 28), un circuit électromagnétique (6) étant prévu dans le carter (4), ledit circuit étant formé d'une bobine enroulée (10) sur une porte-bobine (8), une armature (12), un noyau (14) et un dispositif de reflux (16), l'armature (12) et le noyau (14) étant disposés dans un intérieur de vanne (42) et dans lequel l'armature (12) est contigu à une tige de soupape (36) supportée de manière mobile dans le noyau (14) via des moyens de palier (40), l'armature (12) étant reliée de manière opérationnelle à un corps de fermeture de soupape (32), des moyens à ressort (62) étant prévus pour solliciter l'armature (12), et dans lequel un corps de douille (44) est prévu pour sceller l'intérieur de vanne (42), le corps de douille (44) étant conçu comme un élément de palier pour l'armature (12), **caractérisée en ce que** le corps de fermeture de soupape (32) présente des ouvertures d'égalisation de pression (41) et est monté de façon à être mobile dans le corps de manchon (44) via un élément d'étanchéité (46).

2. Vanne électromagnétique selon la revendication 1, **caractérisée en ce que** le corps de douille (44) est verrouillé dans le carter (4) sous pré-tension.

3. Vanne électromagnétique selon la revendication 1 ou 2, **caractérisée en ce qu'**un deuxième élément d'étanchéité (48) est disposé entre le corps de douille (44) et le carter (4).

4. Vanne électromagnétique selon l'une quelconque des revendications précédentes, **caractérisée en ce que** la tige de vanne (36) est montée de façon à être mobile dans le noyau (14) via un alésage lisse (40).

5. Vanne électromagnétique selon l'une quelconque des revendications précédentes, **caractérisée en ce que** les ouvertures de compensation de pression (41) sont reliées à l'intérieur de vanne (42) par un jeu entre les moyens de palier à cardan (34) et par une rainure longitudinale ou des creux (43) dans la tige de vanne (36).

6. Vanne électromagnétique selon l'une quelconque des revendications précédentes, **caractérisée en ce qu'**un alésage (64) est prévu dans l'armature (12).

7. Vanne électromagnétique selon l'une quelconque des revendications précédentes, **caractérisée en ce qu'**un diamètre ds du siège de soupape (30) est égal à un diamètre dH de la douille de vanne (44) dans la région de l'élément d'étanchéité (46).
